# EUROPEAN PATENT APPLICATION

(11) **EP 2 957 585 A1**
(43) Date of publication of application: **23.12.2015**
(21) Application number: 14751261.0
(22) Date of filing: 18.02.2014
(51) Int. Cl.: C08G 59/62, C08J 5/24, C08L 63/00

(54) **EPOXY RESIN COMPOSITION AND CURED PRODUCT THEREOF, PREPREG, AND FIBER-REINFORCED COMPOSITE MATERIAL**

(30) Priority: 18.02.2013 JP 2013029438
(71) Applicant: Daicel Corporation, Osaka 530-0011 (JP)
(72) Inventor: NAKAMURA, Ryota, Ohtake-shi Hiroshima 739-0695 (JP); SAKANE, Masanori, Ohtake-shi Hiroshima 739-0695 (JP)
(74) Representative: Grünecker Patent- und Rechtsanwälte PartG mbB
(86) International application number: PCT/JP2014/053708
(87) International publication number: WO 2014/126253

(57) **Abstract**

An object of the present invention is to provide an epoxy resin composition which has properties and viscosity to be easily controlled, can be cured at a low temperature in a short time, and can provide a cured product having excellent mechanical characteristics such as high tensile elongation at break, and high heat resistance, and a cured product of the epoxy resin composition (resin cured product).

An epoxy resin composition of the present invention contains: an alicyclic epoxy compound (A); at least one compound (B) selected from the group consisting of a lactone adduct compound having a hydroxy group (B1) and a polycarbonate polyol (B2); and a phenol resin (C). Preferably, the epoxy resin composition of the present invention further contains a curing catalyst (D).

## Description

### Technical Field

The present invention relates to: an epoxy resin composition and a cured product thereof; a prepreg obtained by impregnating or coating a reinforcing fiber with the epoxy resin composition; and a fiber-reinforced composite material obtained by curing the prepreg. The present application is based upon and claims the benefit of priority to Japanese Patent Application No. 2013-029438, filed February 18, 2013. The entire contents of the application are incorporated herein by reference.

### Background Art

An epoxy resin composition containing an epoxy compound (curable epoxy resin composition) has been widely used in various uses such as an adhesive and a structural material. In recent years, a fiber-reinforced composite material has been developed intensively, where the fiber-reinforced composite material is obtained by curing the epoxy resin composition to give a cured product, and further reinforcing the cured product with a reinforcing fiber such as a carbon fiber. The fiber-reinforced composite material is lightweight and tough and, utilizing these characteristic properties, is expected to be applied as various constituent materials such as an automobile part, civil engineering and construction equipment, a wind turbine blade, sports equipment, an aircraft, a ships, a robot, a cable material, and a high-pressure tank.

For example, an epoxy resin composition containing a bisphenol A-type epoxy resin (bisphenol-A diglycidyl ether) as a matrix resin, a curing agent, and an epoxy resin reactive diluent, or the like has been known as the epoxy resin composition for forming the fiber-reinforced composite material (see Patent Literature 1).

### Citation List

### Patent Literature

Patent Literature 1: Japanese Patent Laid-Open No. 9-12729

### Summary of Invention

### Technical Problem

However, prolonged heating at a high temperature is required in order to cure an epoxy resin composition containing an epoxy compound having a glycidyl group such as the bisphenol A-type epoxy resin. The epoxy resin composition is disadvantageous in the productivity of a fiber-reinforced composite material. Furthermore, a cured product obtained by curing the epoxy resin composition has low heat resistance and poor mechanical strength such as low elongation (tensile elongation at break), and is disadvantageous in the mechanical characteristics of the fiber-reinforced composite material.

Furthermore, the epoxy resin composition for forming the fiber-reinforced composite material is required to be easily-controllable to desired properties such as a liquid or a solid, e.g., a desired viscosity such as a low or high viscosity in the case of the liquid in order to allow the epoxy resin composition to be applied to various molding methods.

Accordingly, an object of the present invention is to provide an epoxy resin composition which has properties and viscosity to be easily controlled, can be cured at a low temperature in a short time, and can provide a cured product having excellent mechanical characteristics such as high tensile elongation at break, and high heat resistance, and a cured product of the epoxy resin composition (resin cured product).

Furthermore, another object of the present invention is to provide a fiber-reinforced composite material having excellent productivity, heat resistance, and toughness, where the fiber-reinforced composite material is obtained by impregnating or coating a reinforcing fiber with the epoxy resin composition to give a prepreg; and curing the prepreg.

### Solution to Problem

After intensive investigations to achieve the objects, the inventors have found that an epoxy resin composition containing a specific epoxy compound, a specific compound having a hydroxy group, and a phenol resin has properties and viscosity to be easily controlled, can be cured at a low temperature in a short time, and can provide a cured product obtained by curing the epoxy resin composition and having excellent mechanical characteristics such as high tensile elongation at break, and high heat resistance. The present invention has been made based on these findings.

Specifically, the present invention provides an epoxy resin composition containing: an alicyclic epoxy compound (A); at least one compound (B) selected from the group consisting of a lactone adduct compound having a hydroxy group (B1) and a polycarbonate polyol (B2); and a phenol resin (C).

The present invention provides the epoxy resin composition further containing a curing catalyst (D).

The present invention provides the epoxy resin composition, in which the epoxy resin composition is a resin composition for a fiber-reinforced composite material.

The present invention provides a cured product obtained by curing the epoxy resin composition.

The present invention provides a prepreg obtained by impregnating or coating a reinforcing fiber with the epoxy resin composition.

The present invention provides a fiber-reinforced composite material obtained by curing the prepreg.

Specifically, the present invention is as follows.
(1) An epoxy resin composition containing: an alicyclic epoxy compound (A); at least one compound (B) selected from the group consisting of a lactone adduct compound having a hydroxy group (B1) and a polycarbonate polyol (B2); and a phenol resin (C).
(2) The epoxy resin composition according to (1), in which the alicyclic epoxy compound (A) is at least one selected from the group consisting of (i) a compound having an epoxy group composed of an oxygen atom and adjacent two carbon atoms constituting an alicycle, and (ii) a compound having an epoxy group directly bonded to an alicycle via a single bond.
(3) The epoxy resin composition according to (2), in which the alicyclic epoxy group is a cyclohexene oxide group.
(4) The epoxy resin composition according to any one of (1) to (3), in which the alicyclic epoxy compound (A) is a compound represented by Formula (I). 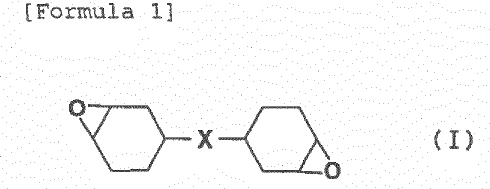 (In Formula (I), X represents a single bond or a linkage group (divalent group having at least one atom.)
(5) The epoxy resin composition according to (4), in which the compound represented by Formula (I) is at least one selected from the group consisting of compounds represented by Formulae (I-1) to (I-10). 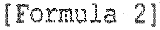 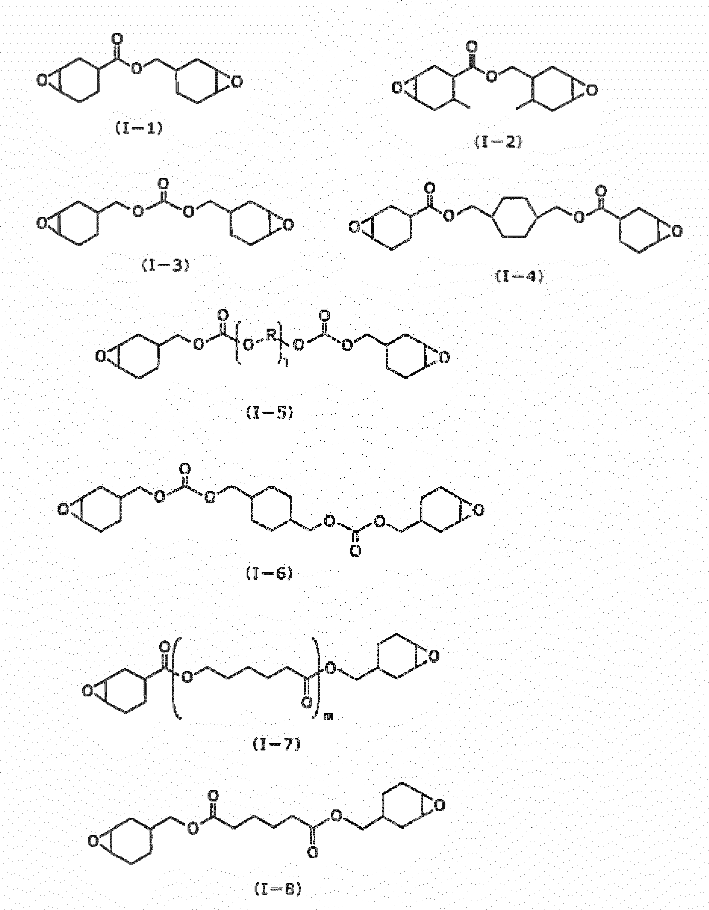 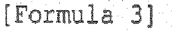 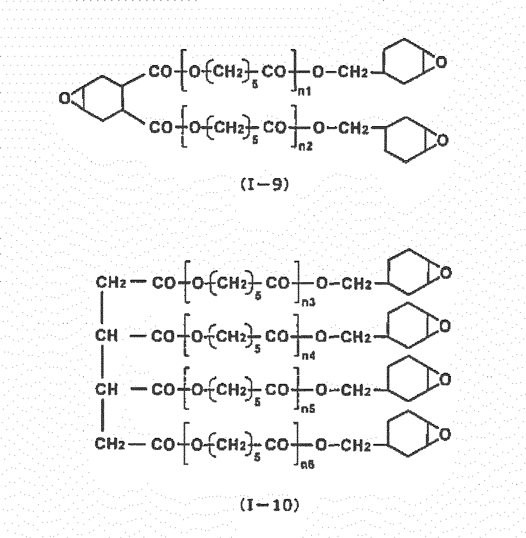 (In Formulae (I-5) and (I-7), "1" and "m" each represent an integer from 1 to 30. R in Formula (I-5) represents a C1-C8 alkylene group. "n1" to "n6" in Formulae (I-9) and (I-10) each represent an integer from 1 to 30.)
(6) The epoxy resin composition according to any one of (1) to (5), in which the content of the alicyclic epoxy compound (A) in the epoxy resin composition is 25 to 95% by weight based on 100% by weight of the epoxy resin composition.
(7) The epoxy resin composition according to any one of (1) to (6), in which the rate of the alicyclic epoxy compound (A) to the total amount, 100% by weight, of the alicyclic epoxy compound (A), the compound (B), and the phenol resin (C) is 25 to 95% by weight.
(8) The epoxy resin composition according to any one of (1) to (7), in which the compound (B) is at least one compound selected from the group consisting of a lactone adduct compound having a hydroxy group (B1) and a polycarbonate polyol (B2).
(9) The epoxy resin composition according to any one of (1) to (8), in which the content (amount blended) of the compound (B) in the epoxy resin composition is 5 to 60 parts by weight based on 100 parts by weight of the alicyclic epoxy compound (A).
(10) The epoxy resin composition according to any one of (1) to (9), in which the hydroxy equivalent of the phenol resin (C) is 50 to 800 g/eq.
(11) The epoxy resin composition according to any one of (1) to (10), in which the content (blending amount) of the phenol resin (C) in the epoxy resin composition is 5 to 40 parts by weight based on 100 parts by weight of the alicyclic epoxy compound (A).
(12) The epoxy resin composition according to any one of (1) to (11), in which the epoxy resin composition further contains a curing catalyst (D).
(13) The epoxy resin composition according to (12), in which the content (amount blended) of the curing catalyst (D) is 0.01 to 15 parts by weight based on the total amount, 100 parts by weight, of a compound having an epoxy group in the epoxy resin composition.
(14) The epoxy resin composition according to any one of (1) to (13), in which the epoxy resin composition is a resin composition for a fiber-reinforced composite material.
(15) A cured product obtained by curing the epoxy resin composition of any one of (1) to (14).
(16) A prepreg obtained by impregnating or coating a reinforcing fiber with the epoxy resin composition of any one of (1) to (14).
(17) A fiber-reinforced composite material obtained by curing the prepreg according to (16).

### Advantageous Effects of Invention

Since the epoxy resin composition of the present invention has the configuration, the epoxy resin composition can be cured at a low temperature in a short time and has properties and viscosity to be easily controlled. Furthermore, by curing the epoxy resin composition of the present invention, a cured product having excellent mechanical characteristics such as high tensile elongation at break, and high heat resistance can be formed with high productivity. A fiber-reinforced composite material having excellent productivity, heat resistance, and toughness can be obtained by coating or impregnating a reinforcing fiber with the epoxy resin composition of the present invention to give a prepreg; and curing the prepreg.

### Description of Embodiments

### <Epoxy Resin Composition>

An epoxy resin composition of the present invention (curable epoxy resin composition) is a resin composition containing: an alicyclic epoxy compound (A); at least one compound (B) selected from the group consisting of a lactone adduct compound having a hydroxy group (B1) and a polycarbonate polyol (B2); and a phenol resin (C) as indispensable components. The epoxy resin composition of the present invention may contain other components such as a curing catalyst (D) to be described later, for example, in addition to the indispensable components.

### [Alicyclic Epoxy Compound (A)]

The alicyclic epoxy compound (A) in the epoxy resin composition of the present invention is a compound having at least an alicycle (aliphatic hydrocarbon ring) structure and an epoxy group per molecule (in one molecule). Specific examples of the alicyclic epoxy compound (A) include (i) a compound having an epoxy group composed of an oxygen atom and adjacent two carbon atoms constituting an alicycle (may be referred to as an "alicyclic epoxy group"), and (ii) a compound having an epoxy group directly bonded to an alicycle via a single bond.
(i) The compound having an epoxy group composed of an oxygen atom and adjacent two carbon atoms constituting an alicycle (alicyclic epoxy group) can be arbitrarily selected from among known or customary ones for use. Among them, the alicyclic epoxy group is preferably a cyclohexene oxide group.
(i) The compound having an epoxy group composed of an oxygen atom and adjacent two carbon atoms constituting an alicycle (alicyclic epoxy group) is preferably a compound having a cyclohexene oxide group from the viewpoint of transparency and heat resistance, and particularly preferably a compound represented by Formula (I) below (alicyclic epoxy compound).

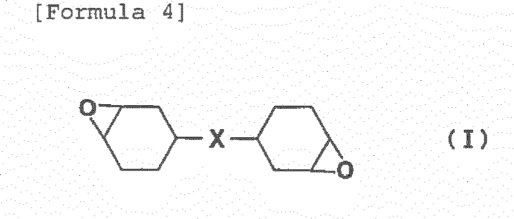

In Formula (I), X represents a single bond or a linkage group (divalent group having at least one atom). Examples of the linkage group include a divalent hydrocarbon group, a carbonyl group, an ether bond, an ester bond, a carbonate group, an amido group, and a group including two or more of these groups linked to each other.

Examples of the compound in Formula (I), where X is a single bond include 3,4,3',4'-diepoxybicyclohexane.

Examples of the divalent hydrocarbon group include a C1-C18 linear or branched chain alkylene group and a divalent alicyclic hydrocarbon group. Examples of the C1-C18 linear or branched chain alkylene group include methylene, methylmethylene, dimethylmethylene, ethylene, propylene, and trimethylene groups. Examples of the divalent alicyclic hydrocarbon group include divalent cycloalkylene groups (including cycloalkylidene groups) such as 1,2-cyclopentylene, 1,3-cyclopentylene, cyclopentylidene, 1,2-cyclohexylene, 1,3-cyclohexylene, 1,4-cyclohexylene, and cyclohexylidene groups.

The linkage group X is particularly preferably an oxygen-containing linkage group. Specific examples thereof include -CO-, -O-CO-O-, -COO-, -O-, and -CONH-; a group including two or more of these groups linked to each other; and a group including one or more of these groups and one or more of divalent hydrocarbon groups linked to each other. Examples of the divalent hydrocarbon groups include ones exemplified above.

Typical examples of the alicyclic epoxy compound represented by Formula (I) include compounds represented by Formulae (I-1) to (I-10) below. In Formulae (I-5) and (I-7) below, "1" and "m" each represent an integer from 1 to 30. R in Formula (I-5) below is a C1-C8 alkylene group, and examples thereof include linear or branched chain alkylene groups such as methylene, ethylene, propylene, isopropylene, butylene, isobutylene, s-butylene, pentylene, hexylene, heptylene, and octylene groups. Among them, preferred are C1-C3 linear or branched chain alkylene groups such as methylene, ethylene, propylene, and isopropylene groups. In Formulae (I-9) and (I-10) below, "n1" to "n6" each represent an integer from 1 to 30.

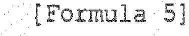

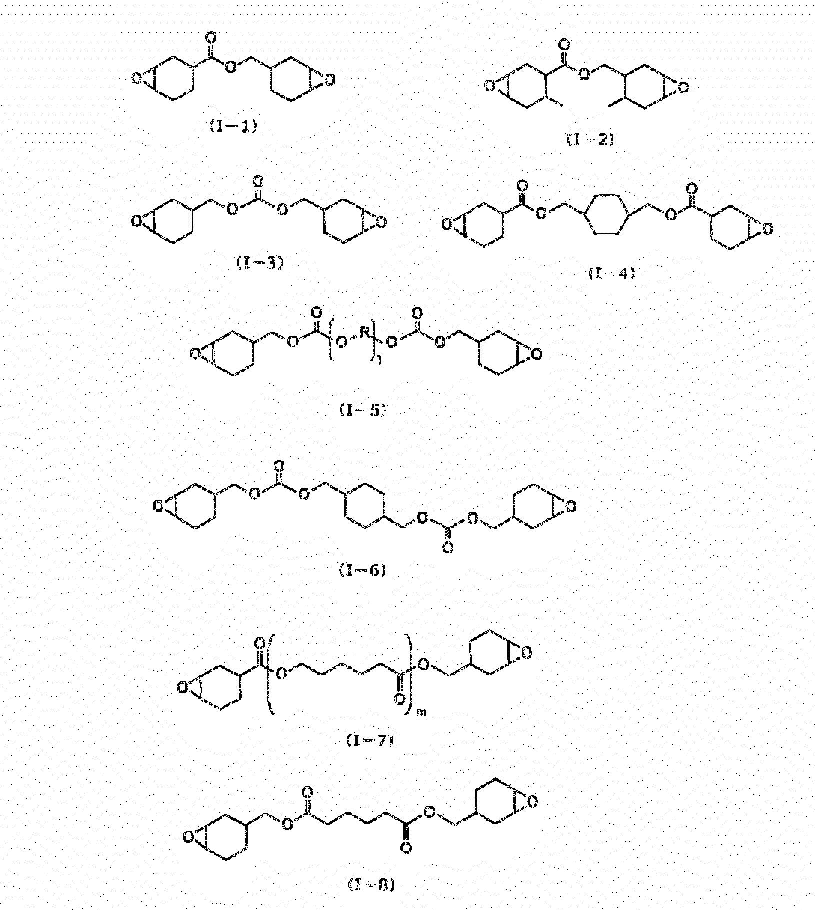

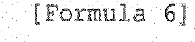

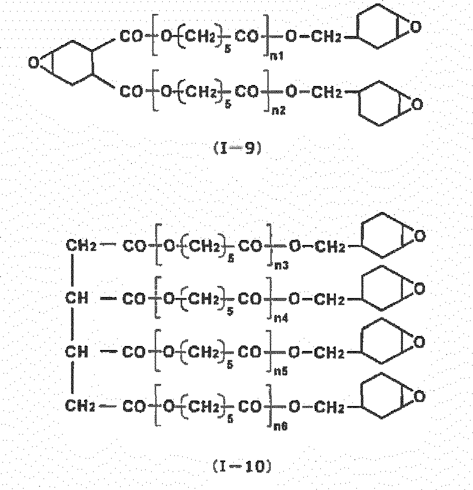

Examples of (ii) the compound having an epoxy group directly bonded to an alicycle via a single bond include a compound represented by Formula (II) below.

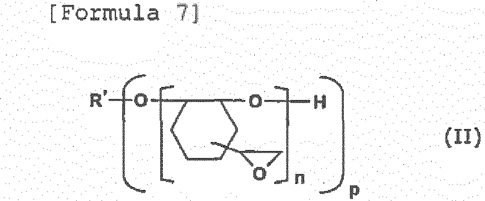

In Formula (II), R' represents a group corresponding to a "p"-hydric alcohol (alcohol having hydroxyl group(s) in a number of "p"), except for removing p-OHs (-OH groups(s) in a number of p) removed therefrom; and "p" and "n" each represent a natural number. Examples of the "p"-hydric alcohol [R'(OH)p] include compounds each having one or more hydroxy groups per molecule to be described later such as polyhydric alcohols (including C1-C15 alcohols) (e.g., 2,2-bis(hydroxymethyl)-1-butanol). The number "p" is preferably from 1 to 6; and the number "n" is preferably from 1 to 30. When "p" is 2 or more, "n" in the groups in the brackets (round brackets) may be the same or different. Specific examples of the compound represented by Formula (II) include a 1,2-epoxy-4-(2-oxiranyl)cyclohexane adduct of 2,2-bis(hydroxymethyl)-1-butanol [e.g., the trade name "EHPE3150" (manufactured by Daicel Corporation) or the like].

In the epoxy resin composition of the present invention, the alicyclic epoxy compound (A) may be used alone or in combination of two or more. For example, there can also be used commercial products such as products under the trade names "CELLOXIDE 2021P" and "CELLOXIDE 2081" (each manufactured by Daicel Corporation) as the alicyclic epoxy compound (A).

The alicyclic epoxy compound (A) is particularly preferably a compound represented by Formula (I-1) [3,4-epoxycyclohexylmethyl(3,4-epoxy)cyclohexanecarboxylate; e.g., the trade name "CELLOXIDE 2021P" (manufactured by Daicel Corporation) or the like].

The content (amount blended) of the alicyclic epoxy compound (A) in the epoxy resin composition of the present invention is not particularly limited, and preferably 25 to 95% by weight, more preferably 35 to 85% by weight, and still more preferably 45 to 75% by weight based on the epoxy resin composition (100% by weight). When the content of the alicyclic epoxy compound (A) is out of the above range, the curability of the epoxy resin composition may be deteriorated, or the heat resistance and mechanical strength of the cured product may be decreased.

The rate of the alicyclic epoxy compound (A) to the total amount (100% by weight) of the alicyclic epoxy compound (A), the compound (B), and the phenol resin (C) in the epoxy resin composition of the present invention is not particularly limited, and preferably 25 to 95% by weight, more preferably 35 to 85% by weight, and still more preferably 45 to 75% by weight. When the rate of the alicyclic epoxy compound (A) is less than 25% by weight, the curability of the epoxy resin composition may be deteriorated, or the heat resistance of the cured product may be decreased. In contrast, when the rate of the alicyclic epoxy compound (A) is more than 95% by weight, the cured product may have poor mechanical characteristics such as low tensile elongation at break.

### [Compound (B)]

The compound (B) in the epoxy resin composition of the present invention is at least one compound selected from the group consisting of a lactone adduct compound having a hydroxy group (B1) and a polycarbonate polyol (B2). The epoxy resin composition of the present invention contains the compound (B) as an indispensable component, which particularly tends to provide an increase in the mechanical strength of the cured product such as high tensile elongation at break.

The lactone adduct compound having a hydroxy group (B1) has one or more hydroxy groups per molecule, and has at least a structure unit formed by subjecting a lactone compound (lactone) to a ring-opening addition reaction (including also ring-opening addition polymerization) [-C(O)-R^{L}-O-](R^{L} represents an alkylene group (may be referred to as a "lactone unit") per molecule. Examples of the lactone compound include, but are not particularly limited to, known or customary lactone compounds. Specific examples thereof include 4- to 10-membered ring lactone compounds such as γ-butyrolactone, 5-valerolactone, and ε-caprolactone. Among them, the lactone compound is preferably ε-caprolactone. Specifically, the lactone adduct compound having a hydroxy group (B1) is preferably a compound having one or more hydroxy groups per molecule, and having at least a structure unit [-C(O)-(CH₂)₅-O-] formed by subjecting ε-caprolactone to a ring-opening addition reaction (including also ring-opening addition polymerization) per molecule (ε-caprolactone adduct compound). The lactone adduct compound having a hydroxy group (B1) may have only one lactone unit, or may have two or more lactone units.

The number (total number) of the lactone units in the molecule of the lactone adduct compound having a hydroxy group (B1) is not particularly limited as long as being 1 or more, and preferably 2 or more (e.g., 2 to 40). When the lactone adduct compound having a hydroxy group (B1) has a structure where two or more lactone units are repeatedly directly bonded (polymerized), the repetition number of the lactone units in the structure (polymerization degree) is not particularly limited, and preferably 2 to 20. The lactone unit in the structure may be added (polymerized) in a random form or a block form without particular limitation.

The number (total number) of the hydroxy groups in the molecule of the lactone adduct compound having a hydroxy group (B1) is not particularly limited as long as being 1 or more, and preferably 2 or more (e.g., 2 to 10), and more preferably 2 to 4.

The lactone adduct compound having a hydroxy group (B1) is not particularly limited, and is obtained by subjecting a lactone compound to a ring-opening addition reaction (including also ring-opening addition polymerization) in the presence of a compound having one or more hydroxy groups per molecule (initiator), for example. Examples of the compound having one or more hydroxy groups per molecule include aliphatic alcohols such as methanol, ethanol, propanol, butanol, pentanol, hexanol, and octanol; aromatic alcohols such as benzyl alcohol; polyhydric alcohols such as ethylene glycol, diethylene glycol, triethylene glycol, polyethylene glycol, propylene glycol, dipropylene glycol, 1,3-butanediol, 1,4-butanediol, pentanediol, methyl pentanediol, 2,4-diethyl pentanediol, 1,6-hexandiol, 2-ethyl-1,3-hexandiol, neopentyl glycol, neopentyl glycol ester, cyclohexane dimethanol, glycerin, diglycerin, polyglycerin, trimethylolpropane, ditrimethylolpropane, pentaerythritol, dipentaerythritol, hydrogenated bisphenol A, hydrogenated bisphenol F, and hydrogenated bisphenol S; phenols such as phenol, biphenol, cresol, catechol, pyrogallol, hydroquinone, hydroquinone monomethyl ether, bisphenol A, bisphenol F, 4,4'-dihydroxy benzophenone, bisphenol S, an alkylene oxide adduct of bisphenol A, an alkylene oxide adduct of bisphenol F, an alkylene oxide adduct of bisphenol S, a phenol novolac resin, and a cresol novolac resin; and oligomers or polymers having hydroxy groups such as polyvinyl alcohol, a partial hydrolysate of polyvinyl acetate, starch, an acrylic polyol, a styrene-allyl alcohol copolymerization resin, a polyester polyol, a polycaprolactone polyol, a polypropylene polyol, a polytetramethylene glycol, a polycarbonate polyol, polybutadiene having a hydroxy group, and cellulose-based polymers (e.g., cellulose, cellulose acetate, cellulose acetate butyrate, and hydroxyethylcellulose). Particularly, from the viewpoint of the reactivity of the lactone adduct compound having a hydroxy group (B1) with the alicyclic epoxy compound (A), the lactone adduct compound having a hydroxy group (B1) is preferably a lactone adduct compound having two or more hydroxy groups per molecule (particularly, ε-caprolactone adduct compound), and more preferably a lactone adduct compound having two or more structures where a terminal of a lactone unit is a hydroxy group (specifically, -C(O)-R^{L}-OH), per molecule.

The lactone compound can be subjected to a ring-opening addition reaction by known or customary methods without particular limitation. For example, the lactone compound can be subjected to a ring-opening addition reaction by mixing and stirring the lactone compound in the presence of an initiator while heating the lactone compound if needed. The amounts of the initiator and lactone compound to be used (amounts charged) can be appropriately adjusted according to the molecular weight or the like of the intended lactone adduct without particular limitation. In the ring-opening addition reaction, there can also be used known or customary catalysts such as tetrabutyl titanate, tetraisopropyl titanate, tetraethyl titanate, dibutyltin oxide, dibutyltin laurate, tin octylate, and stannous chloride if needed. The amount of the catalyst to be used can be appropriately selected according to the kinds and reaction conditions or the like of the initiator and lactone compound without particular limitation.

The polycarbonate polyol (B2) has two or more hydroxy groups per molecule, and has at least a carbonate skeleton per molecule. The polycarbonate polyol (B2) is synthetically prepared by a method for producing a regular carbonate polyol, such as a phosgene method or a carbonate interchange reaction using a dialkyl carbonate (e.g., dimethyl carbonate or diethyl carbonate) or diphenyl carbonate (e.g., Japanese Patent Laid-Open Nos. S62-187725, H02-175721, H02-49025, H03-220233, and H03-252420). A cured product derived from a resin composition containing such a polycarbonate polyol (B2) tends to be highly stable even under hot and humid conditions because of having carbonate bonds resistant to thermal decomposition.

Examples of a polyol for use in combination with the dialkyl carbonate in the carbonate interchange reaction include 1,6-hexanediol, ethylene glycol, diethylene glycol, 1,3-propanediol, 1,4-butanediol, 1,3-butanediol, 2,3-butanediol, 1,5-pentanediol, 3-methyl-1,5-pentanediol, 1,4-cyclohexanedimethanol, 1,12-dodecanediol, butadienediol, neopentyl glycol, tetramethylene glycol, propylene glycol, and dipropylene glycol.

The number (total) of the hydroxy groups in the molecule of the polycarbonate polyol (B2) is not particularly limited as long as being 2 or more, and preferably 2 to 10, and more preferably 2 to 4.

More specifically, examples of the compound (B) include a compound represented by Formula (1) below, and a compound represented by Formula (2) below.

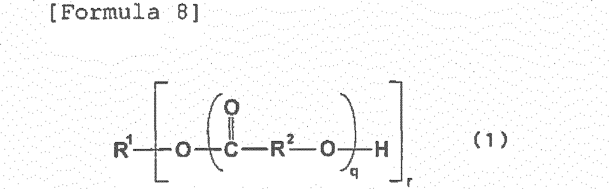

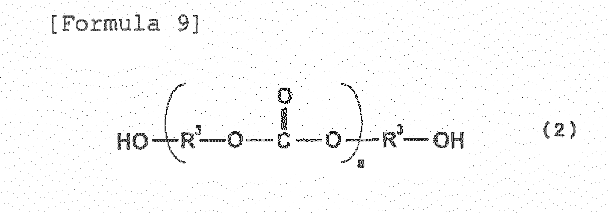

In Formula (1), "r" represents an integer from 1 to 20. In Formula (1), R¹ represents an organic group (organic residue) formed by removing a number "r" of hydroxy groups from a compound having a number "r" of hydroxy groups per molecule [R¹(OH)ᵣ]. Examples of the organic group include an organic group formed by removing one or more (a number "r" of) hydroxy groups from the compound having a number "r" of hydroxy groups per molecule.

In Formula (1), "q" means the repetition number of structures (lactone units) in a bracket with "q", and represents an integer from 0 to 10. The total number of "q" in Formula (1) is an integer of 1 or more. When "r" is an integer of 2 or more, a plurality of "q" may be the same or different.

R² in Formula (1) represents an alkylene group, and examples thereof include C1-C18 linear or branched chain alkylene groups such as methylene, methylmethylene, dimethylmethylene, ethylene, propylene, trimethylene, tetramethylene, and pentamethylene groups. Among them, R² is preferably a pentamethylene group. When a plurality of R² are present in Formula (1), these may be the same or different. The structure (lactone unit) in the bracket with "q" may be added in a random form or a block form without particular limitation.

In Formula (2), "s" represents an integer from 2 to 50. R³ in Formula (2) is the same or different, and represents an alkylene group. R² in Formula (1) is exemplified as R³. A plurality of R³ in a bracket with s may be the same or different. The structure (carbonate skeleton) in the bracket with "s" may be added in a random form or a block form without particular limitation.

The hydroxy value of the compound (B) is not particularly limited, and preferably 10 to 800 mgKOH/g, and more preferably 50 to 600 mgKOH/g. When the hydroxy value is less than 10 mgKOH/g, the cured product may have insufficient heat resistance. In contrast, when the hydroxy value is more than 800 mgKOH/g, the cured product may have insufficient mechanical characteristics. The hydroxy value of the compound (B) can be measured in accordance with JIS K0070.

The molecular weight of the compound (B) is not particularly limited, and preferably 200 to 10000, and more preferably 300 to 3000. When the molecular weight is less than 200, effects of a low elastic modulus and increased bending strength may be reduced. In contrast, when the molecular weight is more than 10000, the cured product may have insufficient heat resistance and mechanical characteristics. The molecular weight of the compound (B) can be measured as a molecular weight measured by gel permeation chromatography and calibrated with a polystyrene standard.

The compound (B) may be a liquid or a solid at 25°C. When the compound (B) is a liquid at 25°C, the viscosity of the compound (B) (25°C) is not particularly limited, and preferably 100 to 25000 mPa·s, and more preferably 500 to 10000 mPa·s.

In the epoxy resin composition of the present invention, the compound (B) may be used alone or in combination of two or more. There can also be used commercial products such as products under the trade names "PLACCEL 205", "PLACCEL 205U", "PLACCEL L205AL", "PLACCEL 208", "PLACCEL 210", "PLACCEL 210N", "PLACCEL 212", "PLACCEL L212AL", "PLACCEL 220", "PLACCEL 220N", "PLACCEL 220NP1", "PLACCEL L220AL", "PLACCEL 230", "PLACCEL 230N", "PLACCEL 240", "PLACCEL 303", "PLACCEL 305", "PLACCEL 308", "PLACCEL 312", "PLACCEL L320AL", "PLACCEL CD205", "PLACCEL CD210", "PLACCEL CD 220", "PLACCEL CD 205PL", "PLACCEL CD 205HL", "PLACCEL CD 210PL", "PLACCEL CD 210HL", "PLACCEL CD 220PL", "PLACCEL CD 220HL", "PLACCEL CD 220EC", and "PLACCEL CD 221T" (each manufactured by Daicel Corporation); the trade names "ETERNACOLL UH-CARB50", "ETERNACOLL UH-CARB100", "ETERNACOLL UH-CARB300", "ETERNACOLL UH-CARB90 (1/3)", "ETERNACOLL UH-CARB90 (1/1)", and "ETERNACOLL UH-CARB100" (each manufactured by Ube Industries, Ltd.); and the trade names "DURANOL T6002", "DURANOL T5652", "DURANOL T4672", "DURANOL T4692", and "DURANOL G3452" (each manufactured by Asahi Kasei Chemicals Corporation) as the compound (B).

The content (amount blended) of the compound (B) in the epoxy resin composition of the present invention is not particularly limited, and preferably 5 to 60 parts by weight, more preferably 15 to 55 parts by weight, and still more preferably 20 to 50 parts by weight based on 100 parts by weight of the alicyclic epoxy compound (A). When the content of the compound (B) is less than 5 parts by weight, the cured product has excessively low tensile elongation at break, which may cause insufficient mechanical strength. In contrast, when the content of the compound (B) is more than 60 parts by weight, the cured product has an excessively low glass-transition temperature, which may cause insufficient heat resistance.

### [Phenol Resin (C)]

Known or customary phenol resins may be used as the phenol resin (C) in the epoxy resin composition of the present invention without particular limitation. The phenol resin (C) is a compound (resin) obtained by subjecting a phenolic compound such as phenol, cresol, or bisphenol A, and an aldehyde compound such as formaldehyde to a condensation reaction. The epoxy resin composition of the present invention contains the phenol resin (C) as an indispensable component, which tends to particularly provide the improved heat resistance of the cured product such as a high glass-transition temperature and thermal decomposition temperature while holding the excellent mechanical strength of the cured product such as high tensile elongation at break. Furthermore, by selecting the properties and viscosity of the phenol resin (C), the properties and viscosity of the epoxy resin composition can be easily controlled.

Examples of the phenol resin (C) include a novolac-type phenol resin obtained by subjecting a phenolic compound and an aldehyde compound to a condensation reaction in the presence of an acid catalyst, a resol-type phenol resin obtained by subjecting a phenolic compound and an aldehyde compound to a condensation reaction in the presence of a base catalyst, and a phenol resin obtained by subjecting a part or all of methylol groups of these phenol resins to alkyl etherification by an alcohol (e.g., C1-C6 alcohol). More specific examples thereof include a phenol novolac resin, an alkylphenol novolac resin, a phenol resol resin, an alkylphenol resol resin, a bisphenol A novolac resin, a dicyclopentadiene-type phenol resin, a terpene-modified phenol resin, a Xylok-type phenol resin, a cresol/naphthol resin, a phenol/naphthol resin, polyvinyl phenol, an aralkyl-type phenol resin, and an alkyl etherified phenol resin. Among them, the novolac-type phenol resin such as the phenol novolac resin or the alkylphenol novolac resin is preferable.

The hydroxy equivalent of the phenol resin (C) is not particularly limited, and preferably 50 to 800 g/eq, and more preferably 80 to 400 g/eq. When the hydroxy equivalent is less than 50 g/eq, the cured product may have insufficient mechanical characteristics such as low tensile elongation at break. In contrast, when the hydroxy equivalent is more than 800 g/eq, the cured product may have insufficient heat resistance such as a low glass-transition temperature. The hydroxy equivalent of the phenol resin (C) can be calculated based on a hydroxy value measured in accordance with JIS K0070.

The phenol resin (C) may be a liquid or a solid at 25°C. The softening temperature of the phenol resin (C) is not particularly limited, and preferably 50 to 200°C, and more preferably 100 to 150°C. When the softening temperature is lower than 50°C, the cured product may have insufficient heat resistance and mechanical strength. In contrast, when the softening temperature is higher than 200°C, a liquid epoxy resin composition having a low viscosity at room temperature is less likely to be obtained, which may cause the limitation of an applicable molding method. The softening temperature of the phenol resin (C) can be measured in accordance with JIS K6910.

In the epoxy resin composition of the present invention, the phenol resin (C) may be used alone or in combination of two or more. Examples of the phenol resin (C) include the trade names "PHENOLITE TD-2131", "PHENOLITE TD-2106", "PHENOLITE TD-2093", "PHENOLITE TD-2091", "PHENOLITE TD-2090", "PHENOLITE VH-4150", "PHENOLITE VH-4170", "PHENOLITE VH-6021", "PHENOLITE KA-1160", "PHENOLITE KA-1163", and "PHENOLITE KA-1165" (each manufactured by DIC Corporation); the trade names "SUMILITERESIN PR-HF-3", "SUMILITERESIN PR-HF-6", "SUMILITERESIN PR-53194", "SUMILITERESIN PR-53195", "SUMILITERESIN PR-54869", "SUMILITERESIN PR-16382", "SUMILITERESIN PR-51939", "SUMILITERESIN PR-53153", "SUMILITERESIN PR-53364", "SUMILITERESIN PR-53365", and "SUMILITERESIN PR-50702" (each manufactured by Sumitomo Bakelite Co., Ltd.; the trade names "Shonol BRG-555", "Shonol BRG-556", "Shonol BRG-558", "Shonol CKM-923", "Shonol CKM-983", "Shonol BKM-2620", "Shonol BRL-2854", "Shonol BRG-5590M", "Shonol CKS-3898", "Shonol CKS-3877A", and "Shonol CKM-937" (each manufactured by Showa Denko K.K.); and the trade names "Nikanol NP-100", "Nikanol P-100", "Nikanol HP-150", and "Nikanol PR-1440" (each manufactured by FUDOW CO., LTD.).

The content (amount blended) of the phenol resin (C) in the epoxy resin composition of the present invention can be appropriately adjusted according to the properties and viscosity or the like of a desired epoxy resin composition without particular limitation. The content is preferably 5 to 40 parts by weight, more preferably 10 to 35 parts by weight, and still more preferably 15 to 30 parts by weight based on 100 parts by weight of the alicyclic epoxy compound (A). When the content of the phenol resin (C) is less than 5 parts by weight, the epoxy resin composition has an excessively low viscosity, which may cause the limitation of an applicable molding method and the insufficient mechanical strength of the cured product. In contrast, when the content of the phenol resin (C) is more than 40 parts by weight, the epoxy resin composition has an excessively high viscosity, or is a solid, which may cause the limitation of an applicable molding method.

### [Curing Catalyst (D)]

The epoxy resin composition of the present invention may further contain a curing catalyst (D). The curing catalyst (D) has the function of initiating and/or accelerating the curing reaction of a compound having an epoxy group. Examples of the curing catalyst (D) include, but are not particularly limited to, a cationic catalyst (cationic-polymerization initiator) which generates cationic species by the application of an ultraviolet ray or heat treatment to initiate the polymerization of the compound. The curing catalyst (D) may be used alone or in combination of two or more.

Examples of the cationic catalyst which generates cationic species upon the application of an ultraviolet ray include a hexafluoroantimonate salt, a pentafluorohydroxyantimonate salt, a hexafluorophosphate salt, and a hexafluoroarsenate salt. For example, there can also be preferably used commercial products such as products under the trade name "UVACURE1590" (manufactured by Daicel-Cytec Co., Ltd.); the trade names "CD-1010", "CD-1011", and "CD-1012" (each manufactured by Sartomer Company Inc., USA); the trade name "IRGACURE 264" (manufactured by BASF); and the trade name "CIT-1682" (manufactured by Nippon Soda Co., Ltd.) as the cationic catalyst.

Examples of the cationic catalyst which generates cationic species by the application of a heating treatment include an aryldiazonium salt, an aryliodonium salt, an arylsulfonium salt, and an allene-ion complex. There can be preferably used commercial products such as products under the trade names "PP-33", "CP-66", and "CP-77" (each manufactured by ADEKA CORPORATION); the trade name "FC-509" (manufactured by 3M Company); the trade name "UVE1014" (manufactured by General Electric Company); the trade names "San-Aid SI-60L", "San-Aid SI-80L", "San-Aid SI-100L", "San-Aid SI-110L", "San-Aid SI-150L", and "SI-B3" (each manufactured by Sanshin Chemical Industry Co., Ltd.); the trade name "CG-24-61" (manufactured by BASF); the trade names "TA-60", "TA-100", "TA-120", and "TA-160" (each manufactured by San-Apro Ltd.); and the trade name "PHOTOINITIATOR 2074" (manufactured by Rhodia Japan Ltd.) as the cationic catalyst. The cationic catalyst may be a compound between a chelate compound and a silanol (e.g., triphenylsilanol). The chelate compound is formed between a metal (e.g., aluminum or titanium) and acetoacetic acid or a diketone. Alternatively, the cationic catalyst may be a compound between a chelate compound and a phenol (e.g., bisphenol-S). The chelate compound is formed between a metal (e.g., aluminum or titanium) and acetoacetic acid or a diketone.

Examples of the curing catalyst (D) include a compound composed of an anion such as a fluoroalkylfluorophosphate ion, a tetra(substituted or unsubstituted phenyl)borate ion, or a hexafluorophosphate ion (PF₆⁻) and a cation such as an iodonium ion, a sulfonium ion, or a selenium ion, and containing no antimony (nonantimony-based compound). The use of such a nonantimony-based compound as the curing catalyst (D) allows a reduction in an environmental load.

The fluoroalkylfluorophosphate ion is represented by Formula (3) below, for example.

[(Rf)ₜPF₆₋ₜ]⁻ (3)

(In Formula (3), Rf represents an alkyl group in which 80% or more of hydrogen atoms are substituted by fluorine atoms, and "t" represents an integer from 1 to 5.)

In Formula (3), Rf represents an alkyl group (preferably, C₁₋₄ alkyl group) in which 80% or more of hydrogen atoms are substituted by fluorine atoms. Among them, Rf is preferably a linear or branched chain C₁₋₄ alkyl group in which 100% of hydrogen atoms are substituted by fluorine atoms (perfluoroalkyl group) such as CF₃, C₂F₅, (CF₃)₂CF, C₃F₇, C₄F₉, (CF₃)₂CFCF₂, CF₃CF₂(CF₃)CF, or (CF₃)₃C. Specifically, particularly, examples of the fluoroalkylfluorophosphate ion include [(C₂F₅)₃PF₃]⁻, [(C₃F₇)₃PF₃]⁻, [((CF₃)₂CF)₃PF₃]⁻, [((CF₃)₂CF)₂PF₄]⁻, [((CF₃)₂CFCF₂)₃PF₃]⁻, and [((CF₃)₂CFCF₂)₂PF₄]⁻.

Examples of the tetra(substituted or unsubstituted phenyl)borate ion include an anion represented by Formula (4) below. More preferable examples thereof include a tetrakis(pentafluorophenyl)borate ion. 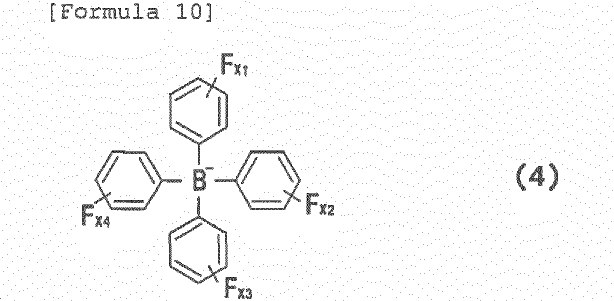 (wherein "x1" to "x4" represent an integer from 0 to 5, and the total value of "x1" to "x4" is 1 or more.)

Examples of the iodonium ion include aryliodonium ions (particularly, bisaryliodonium ions) such as a diphenyliodonium ion, a di-p-tolyliodonium ion, a bis(4-dodecylphenyl)iodonium ion, a bis(4-methoxyphenyl)iodonium ion, a (4-octyloxyphenyl)phenyliodonium ion, a bis(4-decyloxyphenyl)iodonium ion, a 4-(2-hydroxytetradecyloxyphenyl)phenyliodonium ion, a 4-isopropylphenyl(p-tolyl)iodonium ion, and a 4-isobutylphenyl(p-tolyl)iodonium ion.

Examples of the sulfonium ion include arylsulfonium ions (particularly, triarylsulfonium ions) such as a triphenylsulfonium ion, a diphenyl[4-(phenylthio)phenyl]sulfonium ion, and a tri-p-tolyl sulfonium ion.

Specific examples of the nonantimony-based compound include 4-methylphenyl[4-(1-methylethyl)phenyl]iodonium tetrakis(pentafluorophenyl)borate; 4-isopropylphenyl(p-tolyl)iodonium tris(pentafluoroethyl)trifluorophosphate, [1,1'-biphenyl]-4-yl[4-((1,1'-biphenyl)-4-ylthio)phenyl]phenylsulfonium tris(pentafluoroethyl)trifluorophosphate, diphenyl[4-(phenylslufonyl)phenyl]sulfonium tris(pentafluoroethyl)trifluorophosphate, triphenylsulfonium tris(pentafluoroethyl)trifluorophosphate, and [4-(4-biphenylylthio)phenyl]-4-biphenylylphenylsulfonium tris(pentafluoroethyl)trifluorophosphate.

The content (amount blended) of the curing catalyst (D) is not particularly limited, and preferably 0.01 to 15 parts by weight, more preferably 0.01 to 12 parts by weight, still more preferably 0.05 to 10 parts by weight, and yet still more preferably 0.05 to 8 parts by weight based on the total amount, 100 parts by weight, of the compound having an epoxy group in the epoxy resin composition. The use of the curing catalyst (D) in the above-mentioned range can provide a cured product having excellent heat resistance and light resistance.

### [Curing Agent (E)]

The epoxy resin composition of the present invention may further contain a curing agent (E) (e.g., in place of the curing catalyst (D)). The curing agent (E) functions to react with the compound having an epoxy group to cure the epoxy resin composition. Curing agents known or customarily used as epoxy-resin curing agents may be used as the curing agent (E). Among them, the curing agent (E) is preferably an acid anhydride which is liquid at 25°C. Examples thereof include methyltetrahydrophthalic anhydride, methylhexahydrophthalic anhydride, dodecenylsuccinic anhydride, and methyl-endomethylene-tetrahydrophthalic anhydride. When even an acid anhydride being solid at room temperature (about 25°C) (e.g., phthalic anhydride, tetrahydrophthalic anhydride, hexahydrophthalic anhydride, or methylcyclohexenedicarboxylic anhydride) is used as a liquid mixture prepared by dissolving the solid acid anhydride in an acid anhydride being liquid at room temperature (about 25°C), the acid anhydride can be preferably used as the curing agent (E) in the epoxy resin composition of the present invention. The curing agent (E) may be used alone or in combination of two or more. As described above, the curing agent (E) is preferably an anhydride of a saturated monocyclic hydrocarbon dicarboxylic acid (including an anhydride having a substituent group (e.g., alkyl group) bonded to a ring) from the viewpoint of the heat resistance, light resistance, and cracking resistance of the cured product.

In the present invention, there can be used commercial products such as products under the trade names "Rikacid MH-700" and "Rikacid MH-700F" (each manufactured by New Japan Chemical Co., Ltd.) and the trade name "HN-5500" (manufactured by Hitachi Chemical Co., Ltd.) as the curing agent (E).

The content (amount blended) of the curing agent (E) is not particularly limited, and preferably 50 to 200 parts by weight, and more preferably 100 to 145 parts by weight based on the total amount, 100 parts by weight, of the compound having an epoxy group in the epoxy resin composition. More specifically, the curing agent (E) is preferably used at a rate of 0.5 to 1.5 equivalents per equivalent of an epoxy group of entire compounds having an epoxy group in the epoxy resin composition of the present invention. The content of the curing agent (E) of less than 50 parts by weight tends to cause insufficient curing and to cause the cured product to have reduced toughness. In contrast, the content of the curing agent (E) of more than 200 parts by weight may cause the cured product to be colored and to have degraded hue. When two or more curing agents (E) are used, the total amount of the curing agents (E) preferably satisfies the above range.

### [Curing Accelerator (F)]

When the epoxy resin composition of the present invention particularly contains the curing agent (E), the epoxy resin composition may further contain a curing accelerator (F). The curing accelerator (F) is a compound having the function of accelerating the curing rate upon curing of a compound having an epoxy group by the action of the curing agent (E). Known or customary curing accelerators can be used as the curing accelerator (F). Examples thereof include 1,8-diazabicyclo[5.4.0]undecene-7 (DBU), or salts thereof (e.g., phenol salt, octylate salt, p-toluenesulfonate salt, formate salt, and tetraphenylborate salt); 1,5-diazabicyclo[4.3.0]nonene-5 (DBN), or salts thereof (e.g., phenol salt, octylate salt, p-toluenesulfonate salt, formate salt, and tetraphenylborate salt); tertiary amines such as benzyldimethylamine, 2,4,6-tris(dimethylaminomethyl)phenol, and N,N-dimethylcyclohexylamine; imidazoles such as 2-ethyl-4-methylimidazole and 1-cyanoethyl-2-ethyl-4-methylimidazole; phosphoric esters; phosphines such as triphenylphosphine; phosphonium compounds such as tetraphenylphosphonium tetra(p-tolyl)borate; organic metal salts such as zinc octylate and tin octylate; and metal chelates. The curing accelerator (F) may be used alone or in combination of two or more.

In the present invention, there can also be used commercial products such as products under the trade names "U-CAT SA 506", "U-CAT SA 102", "U-CAT 5003", "U-CAT 18X", and "12XD" (product under development) (each manufactured by San-Apro Ltd.); the trade names "TPP-K" and "TPP-MK" (each manufactured by Hokko Chemical Industry Co., Ltd.), and the trade name "PX-4ET" (manufactured by Nippon Chemical Industrial Co., Ltd.) as the curing accelerator (F).

The content (amount blended) of the curing accelerator (F) is not particularly limited, and preferably 0.01 to 5 parts by weight, more preferably 0.03 to 3 parts by weight, and still more preferably 0.03 to 2 parts by weight based on the total amount, 100 parts by weight, of the compound having an epoxy group in the epoxy resin composition. The content of the curing accelerator (F) of less than 0.01 parts by weight tends to cause insufficient curing-accelerating effect. In contrast, the content of the curing accelerator (F) of more than 5 parts by weight may cause the cured product to be colored and to have degraded hue.

### [Additives]

In addition to the above components, the epoxy resin composition of the present invention may further contain any of various additives within ranges not adversely affecting advantageous effects of the present invention. The addition of a compound having a hydroxy group such as ethylene glycol, diethylene glycol, propylene glycol, or glycerin as the additive allows the reaction to proceed mildly. In addition, there can be used customary additives such as a silicone- or fluorine-containing antifoaming agent; a leveling agent; a silane coupling agent (e.g., γ-glycidoxypropyltrimethoxysilane or 3-mercaptopropyltrimethoxysilane); a surfactant; an inorganic filler (e.g., silica or alumina); a flame retardant; a colorant; an antioxidant; an ultraviolet absorber; an ion adsorbent; a pigment; a fluorescent material (e.g., inorganic fluorescent material fine particles such as YAG-based fluorescent material fine particles and silicate-based fluorescent material fine particles); a release agent; and a solvent (e.g., γ-butyrolactone or the like) within ranges not compromising the viscosity and transparency.

The epoxy resin composition of the present invention may further contain a compound having one or more oxetanyl groups per molecule (may be referred to as an "oxetane compound"). The epoxy resin composition containing the oxetane compound tends to have effects of a high curing rate, a high conversion ratio and polymerization degree, and improved heat resistance and strength at break of the cured product. Known or customary oxetane compounds may be used as the oxetane compound without particular limitation. Examples thereof include 3,3-bis(vinyloxymethyl)oxetane, 3-ethyl-3-hydroxymethyloxetane, 3-ethyl-3-(2-ethylhexyloxymethyl)oxetane, 3-ethyl-3-(hydroxymethyl)oxetane, 3-ethyl-3-[(phenoxy)methyl]oxetane, 3-ethyl-3-(hexyloxymethyl)oxetane, 3-ethyl-3-(chloromethyl)oxetane, 3,3-bis(chloromethyl)oxetane, 1,4-bis[(3-ethyl-3-oxetanylmethoxy)methyl]benzene, bis{[1-ethyl(3-oxetanyl)]methyl}ether, 4,4'-bis[(3-ethyl-3-oxetanyl)methoxymethyl]bicyclohexyl, 1,4-bis[(3-ethyl-3-oxetanyl)methoxymethyl]cyclohexane, 1,4-bis{[(3-ethyl-3-oxetanyl)methoxy]methyl}benzene, and 3-ethyl-3-{[(3-ethyloxetane-3-yl)methoxy]methyl}oxetane. The oxetane compound may be used alone or in combination of two or more.

The epoxy resin composition of the present invention can be prepared by stirring and mixing the components in a state where the components are heated if needed, without particular limitation. The epoxy resin composition of the present invention may be used as a 1-package type composition using previously mixed components as it is. For example, the epoxy resin composition may also be used as a multi-package type (e.g., 2-package type) composition obtained by mixing separately prepared two or more components at a predetermined ratio before use. The stirring/mixing method is not particularly limited. For example, there can be used a known or customary stirring/mixing unit such as a mixer (e.g., a dissolver or a homogenizer), a kneader, a roll, a bead mill, or a planetary stirring apparatus. The mixture after stirring and mixing may be subjected to defoam in a vacuum.

The epoxy resin composition of the present invention may be a liquid or a solid at 25°C. When the epoxy resin composition of the present invention is a liquid resin composition at 25°C, the viscosity of the epoxy resin composition (25°C) is not particularly limited, and preferably 5000 to 50000 mPa·s, and more preferably 10000 to 30000 mPa·s. The viscosity of the epoxy resin composition at 25°C of less than 5000 mPa·s or more than 50000 mPa·s tends to cause the limitation of an applicable molding method. The viscosity of the epoxy resin composition at 25°C may be measured under conditions of a rotor: standard 1°34'xR24, a temperature: 25°C, and the number of rotations: 0.5 to 10 rpm using a digital viscometer (trade name "Model DVU-EII" manufactured by Tokimec, Inc.). When the epoxy resin composition of the present invention is a solid at 25°C, the cured product, and a molded article made of the fiber-reinforced composite material can be obtained by a molding method for applying heat to melt the epoxy resin composition (e.g., a transfer molding method or the like), for example.

### <Fiber-Reinforced Composite Material>

As described above, the epoxy resin composition of the present invention has properties and viscosity to be easily controlled, can be cured at a low temperature in a short time, and can provide a cured product obtained by curing the epoxy resin composition and having excellent heat resistance and mechanical characteristics. Thereby, the epoxy resin composition can be particularly preferably used as a resin composition (resin composition for a fiber-reinforced composite material) for forming a composite material of the cured product and reinforcing fiber (fiber-reinforced composite material). Specifically, a fiber-reinforced composite material (may be referred to as a "fiber-reinforced composite material of the present invention") can be obtained by impregnating or coating a reinforcing fiber with the epoxy resin composition of the present invention to give a prepreg (may be referred to as a "prepreg of the present invention"); and curing the prepreg. Since the fiber-reinforced composite material of the present invention has the configuration, the fiber-reinforced composite material has excellent productivity, heat resistance, and toughness.

Known or customary reinforcing fibers can be used as the reinforcing fiber without particular limitation. Examples thereof include a carbon fiber, a glass fiber, an aramid fiber, a boron fiber, a graphite fiber, a silicon carbide fiber, a high-strength polyethylene fiber, a tungsten carbide fiber, and a poly-p-phenylenebenzoxazole fiber (PBO fiber). Examples of the carbon fiber include a polyacrylonitrile (PAN)-based carbon fiber, a pitch-based carbon fiber, and a vapor-grown carbon fiber. Among them, a carbon fiber, a glass fiber, and an aramid fiber are preferred from the viewpoint of mechanical properties (such as toughness). Particularly preferred is a carbon fiber. Specifically, the epoxy resin composition of the present invention can be particularly preferably used as the resin composition for forming the carbon fiber-reinforced composite material (resin composition for a carbon fiber-reinforced composite material). The reinforcing fiber may be used alone or in combination of two or more.

Examples of the form of the reinforcing fiber include, but are not particularly limited to, the forms of a filament (continuous fiber), a tow, a unidirectional material including tows unidirectionally aligned, a woven fabric, and a nonwoven fabric. Examples of such woven fabrics of reinforcing fibers include plain fabrics; twill fabrics; satin fabrics; and stitching sheets which are typified by non-crimp fabrics and produced by preparing a sheet including unidirectionally aligned fiber bundles or a sheet including such fiber bundles laminated with varying lamination angles, and stitching the sheet in order to create integrality of the fabric.

The content of the reinforcing fiber in the prepreg of the present invention can be appropriately adjusted without particular limitation.

The method for impregnating or coating the reinforcing fiber with the epoxy resin composition of the present invention is not particularly limited, and may be performed by impregnation or coating methods in production methods for known or customary prepregs.

The prepreg of the present invention may also be prepared by impregnating or coating the reinforcing fiber with the epoxy resin composition of the present invention; and further curing a part of (namely, semi-curing) compounds (e.g., the alicyclic epoxy compound (A), the compound (B), and the phenol resin (C) or the like) in the epoxy resin composition. The semi-curing may be performed by the application of heat or an active energy ray or the like.

The fiber-reinforced composite material of the present invention can be obtained by curing the prepreg of the present invention as described above. The method for producing the fiber-reinforced composite material is not particularly limited. The fiber-reinforced composite material may be produced by known or customary methods such as hand lay-up, prepreg, RTM, SMC molding, pultrusion, filament winding, spray-up, and pultrusion molding methods. Specifically, examples of the fiber-reinforced composite material of the present invention include a material molded by the prepreg method, a material molded by the RTM method, and a material molded by the SMC molding method (e.g., C-SMC; Carbon-fiber-reinforced Sheet Molding Compound).

The fiber-reinforced composite material of the present invention may be used as materials for various structures without particular limitation. The fiber-reinforced composite material can be preferably used as materials for structures including an aircraft structure such as a fuselage, a main plane, a tail assembly, a rotor blade, a fairing, a cowling, or a door; a spacecraft structure such as a motor case or a main plane; an artificial satellite body structure; an automobile part such as an automobile chassis; a railway vehicle body structure; a bicycle body structure; a ship body structure; a wind turbine blade; a pressure vessel; a fishing rod; a tennis racket; a golf club shaft; a robot arm; and a cable (e.g., a cable core). The fiber-reinforced composite material of the present invention can be preferably used also as a constituent material for a high-pressure tank such as a hydrogen tank and a liquefied natural gas (LNG) tank, for example.

### Examples

The present invention will be described in further detail with reference to Examples below. However, the present invention is not to be construed as being limited to Examples.

### Example 1

As shown in Table 1, a flask was charged with 100 parts by weight of an alicyclic epoxy compound (the trade name "CELLOXIDE 2021P" manufactured by Daicel Corporation), 30 parts by weight of a lactone adduct compound having a hydroxy group (the trade name "PCL 305", polycaprolactone triol manufactured by Daicel Corporation), and 23 parts by weight of a novolac-type phenol resin (the trade name "TD-2090" manufactured by DIC Corporation). These were heated and stirred at 120°C for 2 hours to obtain a mixture, and the mixture was then cooled to room temperature. Then, 1.00 part by weight of a curing catalyst (the trade name "San-Aid SI-100L" manufactured by Sanshin Chemical Industry Co., Ltd.) was added to the mixture, and these were mixed and stirred in a planetary centrifugal mixer (trade name "AWATORIRENTARO (Thinky Mixer)" supplied by THINKY CORPORATION) at room temperature for 5 minutes to prepare an epoxy resin composition. The viscosity of the obtained epoxy resin composition was measured at 25°C by the above method.

Next, the above-obtained epoxy resin composition was placed in molding dies (4-mm deep and 0.5-mm deep casting molds), then heated at 70°C for 1.5 hours as shown in Table 1, and thereafter heated at 90°C for 1 hour to prepare a cured product.

### Comparative Examples 1 to 7

Epoxy resin compositions were prepared in the same manner as in Example 1 except that the constituents and blending ratios of the epoxy resin compositions were changed as shown in Table 1.

Next, the above-obtained epoxy resin compositions were placed in molding dies (4-mm deep and 0.5-mm deep casting molds), and then heated under curing conditions as shown in Table 1 to prepare cured products.

### [Evaluations]

The cured products obtained in Example and Comparative Examples were subjected to evaluations as follows.

### (1) Tensile Characteristics (Tensile Strength at Break, Tensile Elastic Modulus, Tensile Elongation at Break)

The cured products obtained in Example and Comparative Examples (4-mm thick) were processed to produce test specimens each having a thickness of 4 mm, a width of 10 mm, and a length of 80 mm. The test specimens were subjected to a tensile test [tension rate: 5 mm/min, load FS: 5 kN, and chuck distance (gauge distance): 50 mm] in accordance with the measuring method of JIS K7161 using a TENSILON universal tester (manufactured by ORIENTEC Co., Ltd.) to measure the tensile strength at break, tensile elastic modulus, and tensile elongation at break of each of the cured products. The results are shown in "tensile characteristics" in Table 1.

### (2) Heat Resistance (DMA)

Test specimens each having a thickness of 0.5 mm, a width of 8 mm, and a length of 40 mm were cut out from the cured products (0.5-mm thick) obtained in Example and Comparative Examples, and the peak top temperature (Tg (tan 5), unit: °C) of loss tangent (tan 5) of each of the test specimens was measured using a dynamic viscoelasticity measurement instrument (DMA) (manufactured by Seiko Instruments Inc.). The peak top temperature was measured under conditions of a measurement temperature range: -50 to 300°C, a temperature rising rate: 3°C/minute, and a deformation mode: a tensile mode, under a nitrogen stream. The results are shown in "heat resistance (DMA)" in Table 1. Two values described as a glass-transition temperature mean two peaks representing the glass-transition temperature in the measurement.

### (3) Heat Resistance (TG/DTA)

Test specimens of 10 mg were cut out from the cured products (4-mm thick) obtained in Example and Comparative Examples, and the 5% weight loss temperature (Td (5%), unit: °C) and 10% weight loss temperature (Td (10%), unit: °C) of each of the test specimens were measured using a simultaneous thermogravimetric and differential thermal analyzer (TG-DTA) (manufactured by Seiko Instruments Inc.). The 5% weight loss temperature and the 10% weight loss temperature were measured under conditions of a measurement temperature range: 30 to 400°C and a temperature rising rate: 10°C/minute, under a nitrogen stream. The results are shown in "heat resistance (TG/DTA)" in Table 1.

**[Table 1]**

| | | | | Example 1 | Comparative Example 1 | Comparative Example 2 | Comparative Example | Comparative Example 4 | Comparative Example 5 | Comparative Example 6 | Comparative Example 7 |
|---|---|---|---|---|---|---|---|---|---|---|---|
| Epoxy resin composition | Epoxy compound | CELLOXIDE 2021P | parts by weight | 100 | 100 | 100 | 100 | 100 | 100 | 100 | 100 |
| | Lactone adduct compound having hydroxy group | PCL 305 | parts by weight | 30 | - | 30 | 30 | 30 | - | - | 30 |
| | Phenol resin | TD-2090 | parts by weight | 23 | - | - | - | - | 18 | - | - |
| | Curing catalyst | San-Aid S1 100L | parts by weight | 1.00 | 0.60 | 1.00 | 0.80 | 0.60 | 1.00 | 0.15 | 0.15 |
| Viscosity of epoxy resin composition (25°C) (initial viscosity) | | | mPa·s | 17197 | 227 | 329 | 329 | 329 | 25498 | 227 | 337 |
| Curing condition | | | | 70°C×1.5h | 70°C×1.25h | 70°C×h | 70°C×1.25h | 70°C×1.5h | 70°C×1h | 80°C×24h | 80°C×24h |
| | | | | 90°C×1h | 90°C×1h | 90°C×1h | 90°C×1h | 90°C×1h | 90°C×1h | | |
| Cured product | Tensile characteristics | Tensile strength at break | MPa | 81.4 | 20.6 | 56.6 | 68.0 | 66.4 | 35.3 | 24.8 | 59.5 |
| | | Tensile elastic modulus | MPa | 1955.8 | 1852.0 | 1612.5 | 1658.3 | 1591 | 1959.0 | 1779.4 | 1442.9 |
| | | Tensile elongation at break | %GL | 7.0 | 1.3 | 4.9 | 6.8 | 6.6 | 1.9 | 1.7 | 72 |
| | Heat resistance (DMA) | Tg (tanδ) | °C | 120.2/143.2 | 120.5/175. 2 | 115.7/155.3 | 112.0/164.7 | 115.4/168.3 | 117.4/212.1 | 156.6 | 134.9 |
| | Heat resistance (TG/DTA) | Td (5%) | °C | 343.2 | 335.6 | 3177 | 321.9 | 337.8 | 338.4 | 329.9 | 321.0 |
| | | Td (10%) | °C | 367.9 | 353 7 | 341.5 | 344.4 | 359.8 | 361.3 | 350.3 | 346.8 |

As shown in Table 1, the epoxy resin composition obtained in Example could be cured at a low temperature in a short time to prepare the cured product. The obtained cured product had excellent mechanical characteristics such as tensile characteristics, and heat resistance (glass-transition temperature and thermal decomposition temperature). In contrast, prolonged heating was required for the epoxy resin composition obtained in each of Comparative Examples in order to obtain the cured product, and the obtained cured product had poor mechanical characteristics and heat resistance.

Components used in Example and Comparative Examples are as follows.

### [Epoxy Compound]

CELLOXIDE 2021P: 3,4-epoxycyclohexylmethyl(3,4-epoxy)cyclohexanecarboxylate manufactured by Daicel Corporation

### [Lactone adduct compound Having Hydroxy Group]

PCL 305 (PLACCEL 305): polycaprolactone triol manufactured by Daicel Corporation

### [Phenol Resin]

TD-2090: novolac-type phenol resin manufactured by DIC Corporation

### [Curing Catalyst]

San-Aid SI-100L: curing catalyst manufactured by Sanshin Chemical Industry Co., Ltd.

### Industrial Applicability

The epoxy resin composition of the present invention can be particularly preferably used as a resin composition for a fiber-reinforced composite material. The fiber-reinforced composite material can be obtained by impregnating or coating a reinforcing fiber with the epoxy resin composition of the present invention to give a prepreg; and curing the prepreg. The fiber-reinforced composite material of the present invention has excellent productivity, heat resistance, and toughness.

## Claims

1. An epoxy resin composition comprising:
an alicyclic epoxy compound (A);
at least one compound (B) selected from the group consisting of a lactone adduct compound having a hydroxy group (B1) and a polycarbonate polyol (B2); and
a phenol resin (C)

2. The epoxy resin composition according to claim 1, further comprising a curing catalyst (D).

3. The epoxy resin composition according to claim 1 or 2, wherein the epoxy resin composition is a resin composition for a fiber-reinforced composite material.

4. A cured product obtained by curing the epoxy resin composition according to any one of claims 1 to 3.

5. A prepreg obtained by impregnating or coating a reinforcing fiber with the epoxy resin composition according to any one of claims 1 to 3.

6. A fiber-reinforced composite material obtained by curing the prepreg according to claim 5.
